# EUROPEAN PATENT SPECIFICATION

(11) **EP 3 577 088 B1**
(45) Date of publication and mention of the grant of the patent: **19.05.2021**
(21) Application number: 18701379.2
(22) Date of filing: 31.01.2018
(51) Int. Cl.: C04B 28/02, C04B 28/04, C04B 40/00

(54) **IMPROVED INORGANIC PIGMENT-CONTAINING CEMENT-BASED PRODUCT AND METHOD FOR ITS PREPARATION**
VERBESSERTE ANORGANISCHE PIGMENTE ENTHALTENDES ERZEUGNIS AUF ZEMENTBASIS UND VERFAHREN ZU DESSEN HERSTELLUNG
PRODUIT À BASE DE CIMENT CONTENANT DES PIGMENTS INORGANIQUES AMÉLIORÉ ET PROCÉDÉ DE SON PREPARATION

(30) Priority: 01.02.2017 EP 17154284
(43) Date of publication of application: 11.12.2019
(73) Proprietor: Omya International AG, 4665 Oftringen (CH)
(72) Inventor: GONNON, Pascal, F-01480 Villeneuve (FR); BOUILLE, Alexandre, CH-2504 Bienne (CH)
(74) Representative: Plougmann Vingtoft a/s
(86) International application number: PCT/EP2018/052411
(87) International publication number: WO 2018/141797

(56) References cited:
- EP-A1- 2 228 352
- EP-A1- 2 634 151
- EP-A1- 2 634 154
- EP-A1- 2 944 621
- EP-A2- 2 518 035
- WO-A1-03/004414
- WO-A1-2006/134080
- WO-A1-2010/130314
- WO-A1-2012/038810
- WO-A1-2013/018111
- WO-A1-2014/065682
- WO-A1-2015/124313
- WO-A2-2009/134461
- WO-A2-2010/007534
- US-A1- 2004 226 482
- US-A1- 2015 056 437
- LEE H S ET AL: "Influence of inorganic pigments on the fluidity of cement mortars", CEMENT AND CONCRETE RESEARCH, PERGAMON PRESS, ELMSFORD, NY, US, vol. 35, no. 4, 1 April 2005 (2005-04-01), pages 703-710, XP027645703, ISSN: 0008-8846 [retrieved on 2005-04-01]
- S. M. Bruce ET AL: "The influence of pigments on mix designs for block paving units", Proc. 4th Int. Conf. Concrete Block Paving, Pave New Zealand '92 (1992), 31 December 1992 (1992-12-31), pages 117-124, XP055238490, Retrieved from the Internet: URL:http://www.icpi.org/sites/default/file s/techpapers/43.pdf [retrieved on 2016-01-04]
- VALERIA CORINALDESI ET AL: "Influence of inorganic pigments addition on the performance of coloured SCC", CONSTRUCTION AND BUILDING MATERIALS, ELSEVIER, NETHERLANDS, vol. 30, 4 December 2011 (2011-12-04), pages 289-293, XP028458775, ISSN: 0950-0618, DOI: 10.1016/J.CONBUILDMAT.2011.12.037 [retrieved on 2011-12-10]
- JANG HONG-SEOK ET AL: "Color expression characteristics and physical properties of colored mortar using ground granulated blast furnace slag and White Portland Cement", KSCE JOURNAL OF CIVIL ENGINEERING, KOREAN SOCIETY OF CIVIL ENGINEERS, HEIDELBERG, vol. 18, no. 4, 25 April 2014 (2014-04-25) , pages 1125-1132, XP035317281, ISSN: 1226-7988, DOI: 10.1007/S12205-014-0452-Z [retrieved on 2014-04-25]

## Description

### Technical field of the invention

The present invention relates to the use of fine ground calcium carbonate together with an inorganic pigment to produce pigmented cement-based products, such as concrete. Use of the fine calcium carbonate results in improvements in the workability of the mixtures as well as in the properties of the resulting cured cement-based products.

### Background of the invention

Inorganic pigments, typically various oxides, have been used for many years for colored mortars and concrete. The oxide pigments are typically incorporated as fine powders to color the grey or white cement-based product. The amount needed to achieve the required color intensity is generally between 2 and 8% of the total weight of the fines (cement + mineral addition) in the mix, the level of pigment incorporation in a concrete or other cement-based product being mainly driven by the desired color, the raw material properties and the water content of the recipe.

Synthetic iron oxide pigments are useful for cement-based materials in part because they are not sensitive to ultraviolet light. They can be easily dispersed in the wet cement mix and are insoluble, alkali resistant, light fast and chemically inert. Hence, they are suitable for indoor and outdoor cement-based applications.

EP 2 518 035 A2 relates to a white or coloured micro-concrete or common concrete, with architectural high performances, which is dry-formulated, predosed, of quick setting and self-compactable. The said concrete comprises, in percentage by weight of the components with reference to the composition total weight, a) from 10.0% to 70% of white Portland cement; b) from 1.0% to 10.0% of setting adjuster; c) from 26.5% to 55% of limestone aggregates; d) from 9.0% to 20% of natural siliceous aggregate; e) from 10% to 40% of crushed aggregate; f) from 0.01% to 1.0% of superplasticizer; g) from 0.08% to 1.3% of calcium chloride (CaCl₂); h) from 0.1% to 3.2% of calcium formate (Ca(COOH)₂); i) from 0% to 5% of sodium aluminate (NaAlO₂); j) from 0% to 20% of metakaolins; k) from 0% to 5% of nanosilica; 1) from 0% to 10% of microsilica; m) from 0% to 4% of polyvinyl alcohol (PVA) fibers; n) from 0% to 5% of dispersion agents of vinyl acetate and ethylene copolymers; o) from 0% to 5% of neopentylglycol; p) from 0% to 5% of nano-anatase; and optionally q) from 0.3% to 15% of inorganic pigments.

WO 2006/134080 A1 relates to the use of particles of calcium carbonate having a surface area higher than or equal to 10 m²/g in the production of construction materials, in particular plaster, cement render, mortar and concrete. The resulting hardened construction materials exhibit simultaneously several of the following properties, good mechanical resistance, high porosity, low specific weight, high permeability to water vapor, low permeability to liquid water, low surface water absorption, improved flexural strength, improved impact resistance, good surface aspect, good sound absorption and high resistance to UV. Good consistence and high workable life are obtained for the materials before hardening. The construction materials can be used for exterior and interior applications.

Lee et al., CEMENT AND CONCRETE RESEARCH, PERGAMON PRESS, vol. 35, no. 4, 1 April 2005, p. 703-710, reports (abstract) about the negative effects of the presence of pigments in aqueous cementitious mixtures and suggests the increase of water content or the addition of superplasticizer in order to provide fluidity to the slurry, however, no fine ground calcium carbonate (GCC) is present.

Bruce et al., Proc. 4th Int. Conf. Concrete Block Paving, Pave New Zealand '92, 31 December 1992, p. 117-124, discloses that the colouring of block paving units in New Zealand is most commonly achieved by the addition of powdered pigments. The influence of these pigments on the mix design for block paving units is considered in Bruce et al., 1992. The particle size and particle shape of nine commonly used pigments was assessed using electron microscopy and Lea-Nurse fineness apparatus. Standard mortars were then produced to measure the influence of the pigments' particle characteristics on both workability and water/ cement ratio. The influence of different pigments on block mix design, and the durability of concrete block pavements, is discussed.

Corinaldesi et a/., CONSTRUCTION AND BUILDING MATERIALS, ELSEVIER, vol. 30, 4 December 2011, p. 289-293 presents the results of an investigation carried out to develop coloured self-compacting concretes (SCCs) especially devoted to architectural structures. Two different inorganic pigments were tested: the first is cobalt-salt based (for blue coloured SCC), the other iron-oxide based (for red coloured SCC). The leaching behaviour of the two inorganic pigments was assessed by means of leaching test, for estimating release of the most representative soluble ions concerning cementitious materials. The influence of the pigments' addition on concrete rheology was previously studied by means of rheological testscarried out on cement pastes. Then, SCC mixtures were characterised at the fresh state by means of slumpflow and V-funnel tests as well as after hardening by means of compression tests and free dying shrink-age measurements. Low water-cement ratio (equal to 0.45) was always adopted for durability reason.Moreover a shrinkage-free SCC was studied due to the combined use of a CaO-based expansive agent and Shrinkage Reducing Admixture.

WO 2014/065682 A1 relates to a white or colored cementitious mixture for the manufacture of micro-concrete or normal concrete, mortar or pastes with thermochromatic properties, i.e. changing its color depending on the temperature at which the material is exposed. This color change is reversible after some time of exposure to another level of temperature. This cementitious mixture comprises the following components, in percentage in weight of the components relative to the total weight of the composition: a) 35-80% of white or gray Portland cement; b) 0.1-30% of finely ground limestone filler; c) 0.01-3% of powdered super-plasticizer; d) 0.01-3% of modified polyvinyl resins; e) 0,01-5% of dispersant of vinyl acetate and ethylene copolymers; f) 0.3-15% of encapsulated photochromic copolymers; and also one or more components selected from: g) 1-10% of binding regulator; h) 0.1-4% of zinc stearate; i) 1-20% of metakaolins; j) 5-60% of artificial pozzolans; k) 0.1-15% of inorganic pigments.

A key factor in the production of colored concrete is that the amount of pigment incorporated in the product impacts the consistency (i.e. the workability) of the wet mixture, since addition of pigment increases the water requirement. Fine powders such as those of the pigment need to be wetted by thorough mixing and until now, adjustment of consistency has had to be obtained by using additional admixtures. The skilled person will be aware that that each particular pigment requires a specific weight amount of admixture correction which is correlated with the rate of pigment incorporation. Although it would be possible to add additional water to the mixture in order to restore the consistency to what it would have been without the pigment, this is undesirable due to the fact that increasing the amount of water, and thus also the water/cement ratio, would result in a decreased strength in the finished product.

Thus, since the water/cement ratio should remain constant in order to obtain a desired strength, durability and color of the finished product, there is a need in the art for compositions and methods for providing cement-based product wherein the strength, durability and color is not compromised when a pigment is added.

### Summary of the invention

In one aspect, the present invention relates to a cement-based product prepared from a mixture of a cementitious binder, an aggregate, an inorganic pigment, water, optionally a concrete superplasticizer, and fine ground calcium carbonate (GCC) having a weight median particle diameter (d50) in the range of 0.5-5 µm, wherein the weight amount of the fine GCC is in the range of 50% to 300% of the inorganic pigment weight.

Another aspect of the invention relates to a method for preparing a cement-based product, the method comprising mixing a cementitious binder, an aggregate, an inorganic pigment, water, optionally a concrete superplasticizer, and fine ground calcium carbonate (GCC) having a weight median particle diameter (d50) in the range of 0.5-5 µm, wherein the weight amount of the fine GCC is in the range of 50% to 300% of the inorganic pigment weight.

Further embodiments of the invention will be apparent from the detailed description below.

### Detailed description of the invention

### Definitions

As used herein, "natural ground calcium carbonate" (NGCC) refers to calcium carbonate obtained from natural sources, such as limestone, marble, dolomite, or chalk, and processed using a wet and/or dry treatment such as grinding, screening and/or fractionating, for example with a cyclone or classifier. In general, the grinding of ground natural calcium carbonate may be performed in a dry or wet grinding process and may be carried out with any conventional grinding device, for example under conditions such that comminution predominantly results from impacts with a secondary body, e.g. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled person. In case the ground natural calcium carbonate comprises wet ground calcium carbonate, the grinding step may be performed under conditions such that autogenous grinding takes place and/or by horizontal ball milling, and/or other such processes known to the skilled person. The wet-processed ground natural calcium carbonate thus obtained may be washed and dewatered by well-known processes, e.g. by flocculation, filtration or forced evaporation prior to drying. The subsequent step of drying (if necessary) may be carried out in a single step such as spray drying, or in two or more steps. It is also common that such a mineral material undergoes a beneficiation step (such as a flotation, bleaching or magnetic separation step) to remove impurities.

As used herein "fine ground calcium carbonate" (fine GCC) refers to natural ground calcium carbonate (NGCC) that has been subjected to a grinding process to obtain a weight median particle diameter (d50) in the range from 0.5-5 µm, typically less than 5 µm, such as in the range of 0.5-4.9 µm, e.g. 0.6-4.8 µm, such as 0.8-4.7 µm, e.g. 0.9-4.6 µm, such as 1.0-4.5 µm, e.g. 1.0-4.0 µm. The fine GCC may, for example, have a d50 value in the range of from 1.2 to 4.3 µm, e.g. 1.3-4.2 µm, such as 1.5-4.0 µm. As described below under "Particle size distribution", the weight median particle diameter may be determined according to the sedimentation method, e.g. using a Sedigraph™ 5120 particle size analyzer. Any type of natural calcium carbonate may be used to produce the fine GCC, for example ground marble, chalk, limestone or travertine. Methods and equipment for grinding of minerals such as calcium carbonate to a desired weight median particle diameter are well-known in the art, and grinding of the calcium carbonate may thus be performed using any suitable method or type of equipment. Further, suitable fine mineral products such as the fine GCC described herein are commercially available. An example of a commercially available fine GCC is Betoflow® D or Betocarb® F. The fine GCC for use in the present invention may optionally have been ground using a grinding agent of the type described in US 2002/0091177, for example an acrylic copolymer of the type described in US 2004/0030007.

The fine GCC preferably has a CaCO₃ content in the range of 85-100% by weight, more preferably at least 90% by weight, for example 90-99% by weight, such as 95-99% by weight.

As used herein "ground calcium carbonate" (GCC) refers to calcium carbonate that has been subjected to a grinding process to obtain a weight median particle diameter (d50) greater than 5 µm to 40 µm, such as 6-39 µm, e.g. 7-38 µm, such as 8-37 µm, e.g. 9-36 µm, such as 10-35 µm. The GCC may e.g. have a d50 value in the range of 11-34 µm, such as 12-33 µm, e.g. 13-32 µm, such as 14-31 µm, e.g. 15-30 µm, such as 16-29 µm, e.g. 17-28 µm, such as 18-27 µm, e.g. 19-26 µm, such as 20-25 µm measured according to the sedimentation method, e.g. using a Sedigraph™ 5120 particle size analyzer. Any type of natural calcium carbonate may be used to produce the GCC, for example ground marble, chalk, limestone or travertine. Grinding of the calcium carbonate may be performed using any suitable methods and equipment known in the art. An example of a commercially available GCC is Betocarb® HP.

### Particle size distribution

The particle size distribution (mass % particles with a diameter < X) and weight median particle diameter (d50) of the GCC and fine GCC is in the present context determined by analysis of sedimentation behavior in a gravimetric field. The measurement may be performed with a Sedigraph™ 5120 particle size analyzer from Micromeritics Instrument Corporation. The method and the instrument are known to the skilled person and are commonly used to determine grain size of fillers and pigments. The measurement is carried out in an aqueous solution of 0.1 wt % Na₄P₂O₇. Samples are dispersed using a high speed stirrer and supersonicated.

Those skilled in the art will be aware that the fine GCC and GCC of the present invention are natural calcium carbonate products consisting primarily of calcium carbonate but also containing some impurities such as clay. The fine GCC and GCC will thus have natural variation in their composition, for example in the amounts and types of impurities. This will result in some variation in the properties from one batch to another when the calcium carbonate is obtained from different locations or even between different batches obtained from different places in a single quarry. However, those skilled in the art will know how to select a fine GCC and a GCC material with characteristics that make them suitable for use in a given cement-based mixture.

It will also be apparent from the above discussion that a fine GCC material with a d50 close to 5 µm can in principal be highly similar to a "regular" GCC material with a d50 of just over 5 µm. In practice, however, a fine GCC material will be likely to stem from a different location than a GCC material used in a particular mixture and thus will have somewhat different properties. In any event, the skilled person will in each particular case select a fine GCC material and a GCC material that complement each other e.g. in terms of particle size distribution, and that are suitable for obtaining the desired color and workability in a given mixture.

In addition to the d50 value, the GCC and fine GCC materials of the present disclosure may also be characterized by other parameters, for example the percent passing through sieves of different sized and/or the Blaine surface. Table 1 below provides a summary of general specifications for the GCC and the fine GCC materials.

**Table 1: Categorization of GCC and Fine GCC**

| Grading/Surface | GCC | Fine GCC | Determination |
|---|---|---|---|
| 1. Weight median particle diameter (d50) | >5 - 40 µm | 0.5-5 µm | Sedigraph™ 5120 |
| 2. Passing 75 µm (number 200 sieve) | >65% | = 100%^{*} | EN 933-10 |
| 3. Blaine surface | >300 and <1000 m²/kg | >1000 m²/kg | EN 196-6: 1989 |

| | | | |
|---|---|---|---|
| * For the fine GCC, 100% will preferably also pass a 63 µm sieve | | | |

The determination of the fineness of a calcium carbonate material (such as GCC or fine GCC as defined herein) expressed as Blaine surface may be performed according to European standard EN 196, which has the status of a DIN Standard. In the present application, the standard used is DIN EN 196-6: 1989.

The fine GCC used herein may thus optionally also be characterized by a Blaine surface area of at least 1000 m²/kg as determined by European standard EN 196-6: 1989, and/or wherein 100% of the fine GCC passes through a 75 µm (number 200) sieve according to standard EN 933-10, and preferably wherein at least 95%, more preferably at least 98%, most preferably 100% of the fine GCC passes through a 63 µm (number 230) sieve.

As indicated above, the weight amount of the fine GCC will generally be in the range of 50% to 300% of the inorganic pigment weight. The weight amount of the fine GCC may e.g. be in the range of 60% to 280% of the inorganic pigment weight, such as 70% to 250%, e.g. 80% to 200%. As mentioned previously fine GCC is natural calcium carbonate product which may have some variation in its composition however, based on the teaching herein, e.g. using standard methods for determining workability/flowability of cement-based mixtures such as the mini-cone test or the V-funnel test, persons skilled in the art will readily be able to determine the optimal amount of fine GCC to be added to pigment-containing concrete or mortar mixture in order to obtain the desired flow properties.

The cement-based products of the present disclosure preferably comprise, in addition to the cementitious binder, the inorganic pigment and the fine GCC, a "base filler" such as the GCC described herein to promote the compactness of cement-based products. While use of a GCC base filler is preferred, alternatively or additionally one or more other fillers known for use in concrete and other cement-based materials, typically a filler having a particle size similar to the GCC described herein, may also be used, for example metakaolin, kaolin, dolomite, fly ash, alumino-siliceous fillers or organo-siliceous fillers. Such base filler materials for concrete will be known to persons skilled in the art.

A "cement-based product" refers to cement-based building products such as concretes and mortars. In the context of the present invention, the cement-based product will typically be a concrete. For the sake of simplicity, the term "concrete" may be used herein to refer to cement-based products of the invention in general. Thus, absent any indication to the contrary, a reference herein to a "concrete" should be interpreted as referring to any "cement-based product" of the invention.

The term "cement-based mixture" as used herein is understood to refer to a wet, i.e. uncured (non-hardened), mixture comprising cement, pigment, fine GCC and any other components of the particular material being produced, while a "cement-based product" is understood to refer to the cured/hardened material.

A "concrete" is a building material that, in its most basic form, is prepared from a mixture of cement, aggregate (e.g. sand, gravel) and water. A concrete may, for example, be as described in European standard NF EN 206-1. In addition, concrete may include various other materials, for example various pozzolanic materials and/or a dispersing agent such as a concrete superplasticizer.

A "mortar" is prepared from a mixture of cement, sand or other fine aggregate, and water, but in contrast to a concrete a mortar does not contain gravel or other coarse aggregate. A mortar may, for example, be as described in European standard NF EN 13318. Whereas concrete is a structural building material in itself, a mortar is generally used to hold building materials such as brick or stone together or to produce self-leveling flooring systems.

A "concrete superplasticizer" is a type of dispersing agent or surfactant designed for use as an admixture in concrete to provide a well-dispersed particle suspension, to avoid particle segregation, and to improve the flow characteristics of the mixture. A concrete superplasticizer may, for example, be as described in European standard EN 934-2. Addition of a superplasticizer to a concrete mix allows a reduction of the water to cement ratio, thus increasing the strength of the hardened concrete, without negatively affecting the workability of the mixture.

Concrete superplasticizers can belong to several different chemical groups, including polycarbonates, polycarboxylates, polycarboxylate-ethers and iminisulfonates. Other, although less preferred, superplasticizers are manufactured from sulfonated naphthalene condensate or sulfonated melamine formaldehyde. A preferred class of concrete superplasticizers are the polycarboxylates. A commercially available polycarboxylate is CHE 100 (also applied in the experimental data) also sold under the trade name Premium 196 CHRYSO™.

The present disclosure will typically include use of a concrete superplasticizer, which when present will often be incorporated into the cement-based mixture in an amount (w/w) of 0.1-3%, such as 0.2-2%, e.g. 0.3-1.5%, such as 0.3-1%, based on the weight of the cement.

The term "cementitious binder" refers to the binder component of a concrete or other cement-based product, where the binder includes cement and optionally other components such as one or more pozzolanic materials (e.g. fly ash, blast furnace slag, pozzolona, silica fume, calcined clay).

The cementitious binder may comprise any type of cement commonly used for building or construction purposes, for example any of the Portland cement types defined in ASTM C150 or any of the cement types defined in the European standard EN 197-1. EN 197-1 specifies five different types of cement, namely:
- Type I: Portland cement, comprising Portland cement with up to 5% of minor additional constituents
- Type II: Portland-composite cements, comprising Portland cement and up to 35% of other single constituents; including Portland slag cement, Portland silica fume cement, Portland pozzolana cement, Portland fly ash cement, Portland burnt shale cement, Portland limestone cement and Portland composite cement
- Type III: Blastfurnace cement, comprising Portland cement and higher percentages of blastfurnace slag
- Type IV: Pozzolanic cement, comprising Portland cement and up to 55% of pozzolanic constituents
- Type V: Composite cement, comprising Portland cement, blastfurnace slag or fly ash and pozzolana.

The cement may be a gray or a white cement, according to the visual properties desired in the finished product. The choice of cement, e.g. whether it is gray or white, of course also depends on the particular pigment being used, how much pigment will be added to the mixture as well as e.g. price, since white cement is generally more expensive than gray cement.

Pozzolanic materials (pozzolans) are a broad class of siliceous or siliceous/aluminous materials that have little or no cementitious effect alone, but which can react in the presence of water and calcium hydroxide form compounds with cementitious properties. Examples of pozzolans that can be used in concrete, typically together with Portland cement, include silica fume, fly ash, blast furnace slag, calcined clay and rice husk ash.

"Aggregate" refers to any kind of particulate material typically used in concrete, including sand, gravel, crushed stone, slag, recycled concrete or synthetic aggregate. The aggregate may, for example, be as described in European standard EN 12620. The composition and size distribution of the aggregate for any given concrete mixture will be determined by the properties desired in the finished concrete, but will typically include a "fine" aggregate such as sand and often a "coarse" aggregate such as gravel and/or crushed stone. While it is apparent that any kind of aggregate will contain particles of various sizes, a "fine" aggregate may be defined as a material most of which passes through a 4 mm sieve, while a "course" aggregate may be defined as a material most of which is retained on a 4 mm sieve.

"Improving the workability" refers to an improvement in the workability of a cement-based mixture prepared according to the invention compared to a corresponding cement-based mixture comprising the same components but without the fine GCC. It is known that fine particles such as inorganic pigments, GCC and/or fine GCC contribute to the rheological and compactness properties of the cement-based mixture in which they are present, and the present invention is based in part on the discovery of certain unexpected advantages associated with addition of fine GCC to cement-based mixtures containing a pigment. As shown in the examples below, the addition of pigment can be significantly increased by using the pigment in combination with fine GCC (e.g. Betoflow® D). Importantly, this can be achieved without loss of workability. The combination of pigment and fine GCC is typically incorporated as a substitution of a portion of the filler particles such as GCC filler or pozzolanic materials. It is also possible to substitute part of the sand/fine aggregate with pigment and fine GCC.

The fine GCC, when used in accordance with the present invention, can be considered to have a "de-blocking" or "restoration" effect in the sense that the presence of the pigment in the mortar or concrete mixture has a "blocking" effect in terms of a poorer workability of the mixture. Thus, use of a suitable amount of fine GCC in the mixture results in a significant improvement of the workability to a level that is substantially the same as or even better than the workability of the mixture without any pigment, i.e. "de-blocking" the mixture in terms of workability and "restoring" the desired workability properties as well as compressive strength of the cured product.

The workability of the cement-based mixture (mortar or concrete) may be measured using e.g. the "V-funnel test" and/or the "mini-cone test".

The "V-funnel test" refers to a test wherein the viscosity of a cement-based mixture is determined by measuring the time for a specific amount of the mixture to entirely flow through a standardized funnel. The higher the time the mixture takes to pass through the funnel, the higher the viscosity. It is generally desired that cement-based mixtures of the invention have a V-funnel value of at the most 7 seconds, such as at the most 6 seconds, e.g. at the most 5 seconds when using a funnel having the dimensions provided below and the test procedure indicated below. It has been found that incorporation of an inorganic pigment into a cement-based material (e.g. 2% or more of pigment by weight of the cementitious binder) generally leads to a significantly increased V-funnel value, in many cases far above the desired maximum of 7 seconds. According to the invention, use of a suitable amount of fine GCC is able to reduce the V-funnel value back down to or even below the value in a comparable reference mixture without either pigment or fine GCC.

The "mini-cone test" refers to a test wherein the diameter of a cement-based mixture which has been allowed to spread on a reception plate is measured after the mixture has flowed through an inverted cone with an aperture at the bottom. The higher the diameter the higher the flowability (and the lower the viscosity). The dimensions of the cone as well as other details of the test are provided below. It is generally desired that cement-based mixtures of the present disclosure have a diameter of the spread cement-based mixture of at least 320 mm, such as at least 330 mm, preferably at least 340 mm, more preferably at least 350 mm, still more preferably at least 360 mm. However, the mixture should not be too "fluid" and therefore it is also preferred that the diameter of the spread mixture is not more than 430 mm, preferably not more than 420 mm. Thus, it is preferred that the diameter of the mixture in the mini-cone test is in the range of 350-430 mm, and more preferably in the range of 360-420 mm. Similar to the situation for the V-funnel test explained above, it has been found that incorporation of an inorganic pigment into a cement-based material (e.g. 2% or more of pigment by weight of the cementitious binder) generally leads to a reduced mini-cone value well below the desired minimum of 360 mm. Here as well, it has been found that use of a suitable amount of fine GCC in combination with a pigment is able to provide a pigment-containing cement-based mixture with a mini-cone value within the desired range of 360-420 mm. The mini-cone value is typically measured after letting the mixture flow for 30 seconds.

The workability of a cement-based mixture may be measured using both the V-funnel test and the mini-cone test. The workability of a cement-based mixture is considered to be acceptable if the result in the V-funnel test is at or below 7 seconds and if a diameter in the range of 360-420 mm is obtained in the mini-cone test.

The "V-funnel test" and the "mini-cone test" are conducted as follows:
- "mini-cone test": The mini-cone has an upper diameter of 100mm, a lower diameter of 50 mm and a height of 150mm. The test is performed by filling the mini-cone with the test mixture, after which the cone is slowly removed. The flow diameter is then measured after 30 seconds. The test is typically repeated so that the result is an average of two measurements. See also standards EN 12350-2 and EN 12350-8 for the Abrams cone, which is similar to the "mini-cone" described here but twice the size.
- "V-funnel test": The funnel has a lower opening of 30 x 30 mm and an upper opening of 30 x 280 mm. The V-funnel test may be performed as described in standard BS EN 12350-9:2010 ("Testing fresh concrete. Self-compacting concrete. V-funnel test"). Briefly, the test involves filling the funnel, opening the gate at the bottom, and measuring the time the material takes to pass through the funnel in seconds.

"Improving the compressive strength" (Rc) refers to an improvement in the compressive strength of a cement-based product prepared according to the invention compared to a corresponding cement-based product prepared with the same components but without the fine GCC, or at least obtaining a compressive strength that is substantially the same as the compressive strength of a comparable reference cement-based product that does not contain either pigment or fine GCC. A compressive strength that is "substantially the same as" that of a comparable reference cement-based product refers to a compressive strength that is preferably at least 90% of that of the reference product, such as at least 92% or at least 95% as that of the reference product. Thus, the cement-based mixtures prepared herein, after being allowed to harden, preferably result in products have a 1 day and/or 28 day compressive strength that is at least 90% of the compressive strength of that of a comparable reference cement-based product that does not contain either pigment or fine GCC. As described in the examples below, such a reference cement-based product may be one comprising the same amounts of cement, aggregate (e.g. sand), water and superplasticizer as a product prepared according to the invention containing pigment and fine GCC, but where the inorganic pigment and fine GCC is replaced with the same weight amount of "regular" GCC having a weight median particle diameter greater than 5 µm.

The compressive strength of the cement-based product may be determined according to the European Standard EN 196-1. The compressive strength may be determined e.g. at 1 day (24 hours), 7 days and/or 28 days subsequent to casting of the cement-based mixture (referred to as Rc1D, Rc7D and Rc28D, respectively) applying the method disclosed in European Standard DIN EN 196-1. The compressive strength may be measured at day 1 ("early strength") and optionally at day 7, whereas compressive strength measured at day 28 is termed "standard strength". The compressive strength is measured in MPa as is standard in the art, and may be determined by methods that are well-known to persons skilled in the art, e.g. according to standard EN 196-1.

Preferably, the compressive strength of the cement-based product is substantially the same as, and preferably improved, e.g. improved by at least 2%, such as by at least 3%, at least 4% or at least 5%, when compared to that of a reference cement-based product as specified above e.g. at 1 and/or 28 days. In some cases, the compressive strength of a cement-based product of the invention may be improved even more, such as up to 10% or even more.

It will be apparent that the aim of adding a pigment to a cement-based mixture is to obtain a concrete or mortar having a desired color and color saturation.

The optical value (i.e. color) of a cement-based product may be determined according to CIE L*a*b* (CIELAB). CIE L*a*b* (CIELAB) is a color space specified by the International Commission on Illumination (French Commission internationale de l'eclairage). The three coordinates of CIELAB represent the lightness of the color (L*, where L* = 0 indicates black and L* = 100 indicates diffuse white), its position between red/magenta and green (a*, where negative values indicate green while positive values indicate magenta) and its position between yellow and blue (b*, where negative values indicate blue and positive values indicate yellow). The asterisk (*) after L, a and b are part of the full name for differential purposes. In the present application however, the factors L*a*b* may be used equivalently with or without the «*». The L*a*b* value may be determined using a DataColor 600 Spectrophotometer at e.g. 10 and 85 days. In the present context, the CIELAB values may be obtained for test cement-based products and compared to e.g. reference cement-based products.

It is contemplated that in cement-based products of the present disclosure the L* value may be decreased, i.e. resulting in a darker, more color-saturated product, compared with what would otherwise be possible in a comparable product not containing fine GCC, while maintaining or improving workability of the cement-based mixture and compressive strength of the product compared to a reference mixture and product without pigment or fine GCC.

Although the term "pigments" refers generally to both organic and inorganic pigments, in the present context, i.e. for use in cement-based products, inorganic pigments are preferred. This is due to the fact that even though organic pigments may have higher tinting strengths and can be advantageous for other applications such as paints or plastics, in cementitious materials, and in particular when used outdoors, they have poor lightfastness, weatherability and resistance to alkalis.

The inorganic pigments for use in the present invention may be natural or synthetic pigments. Inorganic pigments are most often obtained from a natural mineral source and are chemically most often oxides, sulphides or sulphates, in particular iron oxides. The inorganic pigment may for example be a synthetic or natural iron oxide pigment, a chromium oxide pigment, cobalt blue, titanium dioxide, or a nickel or chrome antimony titanium pigment. In the case of the inorganic pigment being a synthetic iron oxide pigment, this may e.g. selected from the group consisting of a red iron oxide pigment, a black iron oxide pigment, a yellow iron oxide pigment and a brown iron oxide pigment.

As indicated above, inorganic pigments are generally more resistant to light and chemical attack and are more durable in cement-based products than organic pigments, but due to their lack of durability in cementitious materials they are less preferred. Color pigments may be available as powders, liquids, slurries or in the form of granules, although for the purposes of the present invention they will typically be in the form of a fine powder. The pigments used for purposes of the present invention are typically inorganic pigments in powder or granular form, more typically in powder form, having a typical weight median particle diameter (d50) in the range of 0.2 to 1 µm, e.g. as determined with by laser method using a Beckman Coulter LS 13 320 laser diffraction particle size analyzer. Inorganic pigments for use in concrete and mortar are commercially available and are known to persons skilled in the art.

As indicated above, the pigmented concrete or mortar of the invention will generally comprise at least 2% w/w of the inorganic pigment by weight of the cementitious binder, and will more typically comprise a larger amount, e.g. at least 3%, such as at least 4%. An important advantage of the invention is that allows for incorporation of higher amounts of pigment in concrete or mortar while maintaining optimal workability properties in the wet mixture and optimal compressive strength in the finished product. Thus, relatively large amounts of the inorganic pigment may be used if desired, for example up to and including 30% inorganic pigment by weight of the cementitious binder, e.g. up to and including 25%, e.g. as up to and including 20%, such as up to and including 15%, such as up to and including 12%.

For use in cement-based products, the inorganic pigments are preferably alkali resistant, UV resistant, water-insoluble, chemically inert and weather resistant. The pigments applied in the present invention may be classified according to Active Standard ASTM C979 or EN 12878.

The density of a cement-based product produced according to the present invention may be determined according to European standard EN 12350-6. In general, a higher density product will have a higher compressive strength than a similar product of a lower density.

In the present context the term "water" is to be understood as any type of water including tap water.

It should be noted that embodiments and features described in the context of one of the aspects of the present invention also apply to the other aspects of the invention.

The invention will now be described in further detail in the following non-limiting examples.

### Examples

### Example 1

A series of mortars containing various amounts of different inorganic pigments, GCC and fine GCC were prepared. For each mixture, the workability, density, color and compressive strength were determined.

### Materials and methods

Other than the different amounts of pigment, GCC and fine GCC in the mixtures, each mixture comprised the following ingredients:
- 1350 g sand (SAN099)
- 415 g cement (CEM113)
- 230 g water (tap water)
- 1.8 g additive (CHE100)
Each mixture was prepared with a total "fines" content of 260 g, where "fines" in this context refers to the GCC, fine GCC and/or pigment.

"SAN099" is a standard siliceous sand as defined in standard EN 196-1.

"CEM113" is a white Portland cement from Lafarge™ designated CEM I 52,5 N CE (CP2 NF) blanc.

"CHE100" is a polycarboxylate concrete superplasticizer sold under the name Premium 196 CHRYSO™.

The GCC was Betocarb® from Omya International AG. The Betocarb® GCC has a d50 value of 7 µm, a Blaine surface area of 467 m2/kg and a carbonate content of 98.7%.

The fine GCC was Betoflow® D from Omya International AG. The Betoflow® D GCC has a d50 value of 3 µm, a Blaine surface area of 1100 m2/kg and a carbonate content of 98.7%.

The pigments used were the following:
- Red I = PIG 115
- Red II = PIG 116
- Red III= PIG 127
- Red IV = PIG 128
- Yellow I = PIG 118
- Yellow II= PIG 129
- Black I = PIG 117
- Black II = PIG 126
- Blue I = PIG 124
- Blue II = PIG 125

Table 2 below discloses the specifications of PIG 115, 116, 117,118, 124, 125, 126, 127, 128 and 129. The water number specifies the amount of water (g/100 g pigment) needed to achieve a given consistency, based on EN 196-3. The number for m2/g is the BET surface, and the numbers for "<1%", "<25%","<75%" and "<99%" indicate the size of the sieve (µm) at which the respective percentages (by weight) of the different pigments are passing.

**Table 2. Pigment details**

| Code | Water g/100g pigment | m2/g | <1% % | <25% % | <75% % | <99% % | D50 µm | D90 µm | D10 µm | Color and composition |
|---|---|---|---|---|---|---|---|---|---|---|
| 115 | 33.5 | 14.8 | 0.06 | 0.14 | 0.66 | 1.13 | 0.23 | 0.86 | 0.10 | Red (I) Fe₂O₃ |
| 116 | 28.7 | 9.3 | 0.07 | 0.23 | 0.64 | 1.04 | 0.43 | 0.80 | 0.13 | Red (II) Fe₂O₃ |
| 117 | 29.5 | 16.8 | 0.08 | 0.50 | 1.41 | 20.54 | 1.00 | 5.40 | 0.21 | Black (I) Fe₃O₄ |
| 118 | 60.4 | 15.3 | 0.04 | 0.07 | 0.30 | 2.21 | 0.20 | 0.87 | 0.06 | Yellow (I) FeOOH |
| 124 | 42.3 | 15.1 | 0.02 | 0.08 | 0.32 | 0.76 | 0.12 | 0.69 | 0.03 | Blue (I) Na₆Al₄Si₆S₄O₂₀ |
| 125 | 35.9 | 15.2 | 0.03 | 0.10 | 0.38 | 0.83 | 0.16 | 0.78 | 0.04 | Blue (II) Na₆Al₄Si₆S₄O₂₀ |
| 126 | 33.4 | 13.8 | 0.04 | 0.21 | 0.81 | 1.38 | 1.31 | 6.24 | 0.35 | Black (II) Fe₃O₄ |
| 127 | 30.7 | 10.6 | 0.08 | 0.24 | 0.72 | 1.21 | 0.29 | 0.80 | 0.11 | Red (III) Fe₂O₃ |
| 128 | 40.8 | 13.9 | 0.07 | 0.20 | 0.63 | 1.09 | 0.34 | 0.82 | 0.14 | Red (IV) Fe₂O₃ |
| 129 | 55.2 | 14.2 | 0.05 | 0.10 | 0.28 | 2.53 | 0.24 | 0.92 | 0.07 | Yellow (II) Fe₂O₃. H₂O |

The general procedure used for preparing the tested cement-based mixtures is as follows:
- mixing of the additive (superplasticizer) and water in the mixing bowl
- incorporation of cement + inorganic pigment, GCC and/or fine GCC according to the specifications of the test mixture
- slow mixing
- incorporation of sand after 30 seconds
- high-speed mixing for 60 seconds
- stop for 30 seconds and clean sides
- high-speed mixing for 90 seconds

The amount of GCC, fine GCC and pigment in the mixtures is shown in Table 3 below:

**Table 3. GCC, fine GCC and pigment composition of test mixtures**

| **Sample number** | **GCC g** | **Fine GCC g** | **Pigment Type** | **Pigment g** | **Pigment/- cement %** |
|---|---|---|---|---|---|
| 1 | 260 | 0 | - | 0 | 0.00 |
| 2 | 235 | 0 | Red I/115 | 25 | 6.02 |
| 3 | 219 | 0 | 115 | 41 | 9.88 |
| 4 | 169 | 50 | 115 | 41 | 9.88 |
| 5 | 0 | 170 | 115 | 90 | 21.69 |
| | | | | | |
| 6 | 260 | 0 | - | 0 | 0.00 |
| 7 | 235 | 0 | Yellow I/118 | 25 | 6.02 |
| 8 | 219 | 0 | 118 | 41 | 9.88 |
| 9 | 144 | 75 | 118 | 41 | 9.88 |
| 10 | 119 | 100 | 118 | 41 | 9.88 |
| 11 | 0 | 180 | 118 | 80 | 19.28 |
| 12 | 0 | 192 | 118 | 68 | 16.39 |
| | | | | | |
| 13 | 260 | 0 | - | 0 | 0.00 |
| 14 | 235 | 0 | Red 11/116 | 25 | 6.02 |
| 15 | 219 | 0 | 116 | 41 | 9.88 |
| 16 | 194 | 25 | 116 | 41 | 9.88 |
| 17 | 0 | 122 | 116 | 138 | 33.25 |
| | | | | | |
| 18 | 260 | 0 | - | 0 | 0.00 |
| 19 | 235 | 0 | Black I/117 | 25 | 6.02 |
| 20 | 219 | 0 | 117 | 41 | 9.88 |
| 21 | 144 | 75 | 117 | 41 | 9.88 |
| 22 | 0 | 192 | 117 | 68 | 16.39 |
| 23 | 260 | 0 | - | 0 | 0.00 |
| 24 | 235 | 0 | Yellow II/129 | 25 | 6.02 |
| 25 | 219 | 0 | 129 | 41 | 9.88 |
| 26 | 159 | 60 | 129 | 41 | 9.88 |
| 27 | 0 | 170 | 129 | 90 | 21.69 |
| | | | | | |
| 28 | 260 | 0 | - | 0 | 0.00 |
| 29 | 235 | 0 | Blue I/124 | 25 | 6.02 |
| 30 | 219 | 0 | 124 | 41 | 9.88 |
| 31 | 169 | 50 | 124 | 41 | 9.86 |
| 32 | 60 | 110 | 124 | 90 | 21.69 |
| | | | | | |
| 33 | 260 | 0 | - | 0 | 0.00 |
| 34 | 235 | 0 | Blue II/125 | 25 | 6.02 |
| 35 | 219 | 0 | 125 | 41 | 9.88 |
| 36 | 179 | 40 | 125 | 41 | 9.88 |
| 37 | 82 | 88 | 125 | 90 | 21.69 |
| | | | | | |
| 38 | 260 | 0 | - | 0 | 0.00 |
| 39 | 235 | 0 | Black II/126 | 25 | 6.02 |
| 40 | 219 | 0 | 126 | 41 | 9.88 |
| 41 | 179 | 40 | 126 | 41 | 9.88 |
| 42 | 169 | 50 | 126 | 41 | 9.88 |
| 43 | 0 | 170 | 126 | 90 | 21.69 |
| | | | | | |
| 44 | 260 | 0 | - | 0 | 0.00 |
| 45 | 235 | 0 | Red III/127 | 25 | 6.02 |
| 46 | 219 | 0 | 127 | 41 | 9.88 |
| 47 | 179 | 40 | 127 | 41 | 9.88 |
| 48 | 81 | 89 | 127 | 90 | 21.69 |
| | | | | | |
| 49 | 260 | 0 | - | 0 | 0.00 |
| 50 | 235 | 0 | Red IV/128 | 25 | 6.02 |
| 51 | 219 | 0 | 128 | 41 | 9.88 |
| 52 | 80 | 90 | 128 | 90 | 21.69 |

### Results

Table 4 below provides the test results of the various mixtures and corresponding products, namely the workability expressed as the mini-cone value and the V-funnel value, the color properties expressed as L*a*b* values, air and water, the density of the products, and the 1 and 28 day compressive strength values. The air and water values are used to calculate the density of the hardened mortar at 24 hours ((weight air/(weight air-weight water)) = density). The air and water weight values are determined by casting three specimens (size 4x4x16 cm) and after 24 hours the three mortars are weighed in water and in air.

**Table 4. Test results**

| **Sample number** | **Flow test mm Mini cone** | **Flow test sec V-Funnel** | **L 10D phase I** | **a 10D** | **b 10D** | **Air g** | **Water g** | **Density** | **Rc1D MPa** | **Rc28D MPa** |
|---|---|---|---|---|---|---|---|---|---|---|
| 1 | 410 | 5.1 | 87.9 | -0.3 | 4.3 | 1754 | 989 | 2.29 | 29.1 | 52.0 |
| 2 | 310 | 7.3 | 49.3 | 34.3 | 32.8 | 1737 | 976 | 2.28 | 28.0 | 51.7 |
| 3 | 235 | 60 | 44.9 | 34.5 | 34.0 | 1726 | 966 | 2.27 | 27.4 | 51.1 |
| 4 | 360 | 5.9 | 42.6 | 35.4 | 37.9 | 1755 | 992 | 2.30 | 29.2 | 54.4 |
| 5 | 395 | 4.3 | 39.0 | 35.3 | 38.8 | 1784 | 1023 | 2.34 | 33.2 | 59.5 |
| | | | | | | | | | | |
| 6 | 410 | 5.1 | 87.9 | -0.3 | 4.3 | 1754 | 989 | 2.29 | 29.1 | 52.0 |
| 7 | 290 | 8.3 | 73.5 | 7.4 | 53.7 | 1730 | 966 | 2.26 | 30.3 | 53.8 |
| 8 | 195 | 60 | 71.0 | 8.5 | 55.0 | 1704 | 950 | 2.26 | 29.1 | 49.6 |
| 9 | 380 | 4.9 | 68.5 | 9.4 | 56.5 | 1765 | 998 | 2.30 | 33.0 | 62.2 |
| 10 | 410 | 5 | 67.3 | 9.3 | 56.5 | 1773 | 1008 | 2.32 | 32.5 | 58.1 |
| 11 | 370 | 5 | 67.1 | 9.7 | 56.4 | 1765 | 1003 | 2.32 | 35.0 | 60.6 |
| 12 | 405 | 4.7 | 66.9 | 9.7 | 57.0 | 1783 | 1018 | 2.33 | 34.0 | 61.1 |
| | | | | | | | | | | |
| 13 | 410 | 5.1 | 87.9 | -0.3 | 4.3 | 1754 | 989 | 2.29 | 29.1 | 52.0 |
| 14 | 330 | 7.2 | 46.5 | 32.7 | 22.7 | 1741 | 978 | 2.28 | 29.3 | 54.1 |
| 15 | 315 | 5.8 | 42.5 | 34.0 | 25.5 | 1738 | 977 | 2.28 | 28.8 | 53.7 |
| 16 | 385 | 4.7 | 39.9 | 34.0 | 26.1 | 1745 | 990 | 2.31 | 29.2 | 57.3 |
| 17 | 390 | 4.5 | 37.1 | 34.8 | 33.3 | 1794 | 1032 | 2.35 | 32.6 | 56.9 |
| | | | | | | | | | | |
| 18 | 410 | 5.1 | 87.9 | -0.3 | 4.3 | 1754 | 989 | 2.29 | 29.1 | 52.0 |
| 19 | 280 | 8 | 51.0 | -0.5 | -0.1 | 1685 | 933 | 2.24 | 26.3 | 49.5 |
| 20 | 190 | 60 | 36.2 | 0.1 | 1.0 | 1693 | 940 | 2.25 | 24.6 | 50.8 |
| 21 | 360 | 4.3 | 46.9 | -0.8 | -0.1 | 1712 | 947 | 2.24 | 26.2 | 51.6 |
| 22 | 370 | 4.5 | 34.1 | -0.4 | -1.0 | 1738 | 975 | 2.28 | 29.5 | 50.3 |
| 23 | 360 | 6.9 | 88.9 | -0.4 | 4.4 | - | - | - | - | - |
| 24 | 150 | 60 | 49.3 | 34.3 | 32.8 | - | - | - | - | - |
| 25 | - | - | 44.9 | 34.5 | 34.0 | - | - | - | - | - |
| 26 | 345 | 6 | 42.6 | 35.4 | 37.9 | - | - | - | - | - |
| 27 | 395 | 4.3 | 39.0 | 35.3 | 38.8 | 1743 | 982 | 2.29 | 36.6 | 62.5 |
| | | | | | | | | | | |
| 28 | 410 | 5.1 | 87.9 | -0.3 | 4.3 | - | - | - | - | - |
| 29 | 300 | 7.2 | 73.5 | 7.4 | 53.7 | - | - | - | - | - |
| 30 | 240 | - | 71.0 | 8.5 | 55.0 | - | - | - | - | - |
| 31 | 405 | 6 | 68.5 | 9.4 | 56.5 | - | - | - | - | - |
| 32 | 400 | 4.7 | 67.3 | 9.3 | 56.5 | 1776 | 1006 | 2.31 | 26.1 | 85.2 |
| | | | | | | | | | | |
| 33 | 405 | 6.7 | 88.2 | -0.4 | 4.3 | - | - | - | - | - |
| 34 | 310 | 9.7 | 61.2 | 5.1 | -37.9 | - | - | - | - | - |
| 35 | 225 | 60 | 55.6 | 9.1 | -45.2 | - | - | - | - | - |
| 36 | 410 | 5.1 | 57.3 | 8.0 | -43.2 | - | - | - | - | - |
| 37 | 365 | 4.9 | 49.3 | 15.1 | -53.1 | 1766 | 1002 | 2.31 | 28.3 | 77.0 |
| | | | | | | | | | | |
| 38 | 380 | 6.4 | 88.0 | -0.4 | 4.1 | - | - | - | - | - |
| 39 | 260 | 9.8 | 45.2 | 1.4 | 0.2 | - | - | - | - | - |
| 40 | 205 | 60 | 33.2 | 2.2 | 2.8 | - | - | - | - | - |
| 41 | 335 | 5.5 | 36.8 | 1.6 | 2.2 | - | - | - | - | - |
| 42 | 355 | 4.9 | 46.4 | 0.8 | -1.5 | - | - | - | - | - |
| 43 | 320 | 5.4 | 33.6 | 0.9 | -1.4 | 1775 | 1011 | 2.3 | 31.3 | 59.0 |
| | | | | | | | | | | |
| 44 | 410 | 5.1 | 89.1 | -0.4 | 4.1 | - | - | - | - | - |
| 45 | 300 | 6.4 | 47.7 | 35.7 | 33.3 | - | - | - | - | - |
| 46 | 245 | 60 | 44.6 | 35.8 | 33.4 | - | - | - | - | - |
| 47 | 380 | 5.8 | 43.5 | 36.6 | 37.2 | 1747 | 989 | 2.3 | 30.3 | 58.4 |
| 48 | 345 | 4.5 | 40.6 | 36.1 | 37.2 | | | | | |
| | | | | | | | | | | |
| 49 | 390 | 6.5 | 88.8 | -0.4 | 4.3 | - | - | - | - | - |
| 50 | 370 | 5.9 | 46.1 | 33.1 | 24.4 | - | - | - | - | - |
| 51 | 350 | 5.5 | 42.3 | 34.5 | 27.4 | - | - | - | - | - |
| 52 | 400 | 3.8 | 37.7 | 34.7 | 31.5 | 1793 | 1028 | 2.3 | 31.2 | 63.6 |

| | | | | | | | | | | |
|---|---|---|---|---|---|---|---|---|---|---|
| Note: Samples numbered 1, 6, 13, 18, 23, 28, 33, 38, 44 and 48 in table 4 are identical. For ease of comparison, however, these control samples without pigment have been listed in table 4 together with the mixtures for each individual pigment. | | | | | | | | | | |

A number of observations may be made from the results in Table 4 above. First of all, it is apparent that for each pigment, addition of pigment to the mixture without addition of fine GCC as a "de-blocking" additive results in poorer workability properties. For example, addition of 41 g of pigment without fine GCC in most cases results in a V-funnel value of 60 (which is the maximum value in this test, i.e. a flow time of more than 60 seconds in the V-funnel test is given a score of 60 and the test is discontinued). In addition, the results in the mini-cone test, even at a pigment addition of 25 g, is far below the desired minimum value of 360 mm without addition of fine GCC.

On the other hand, addition of fine GCC - i.e. replacing a portion of the "regular" GCC with fine GCC as indicated in the table - in all cases restores the workability properties of the mixtures containing 41 g pigment to within the desired ranges for both the mini-cone test and the V-funnel test. Similarly, the results for mixtures containing much greater amounts of pigment show that for these mixtures as well addition of fine GCC allows for preparation of cement-based mixtures with high amounts of pigments together with maintenance of optimal flow properties.

The results further show that the 1 and 28 day compressive strengths of the products prepared using pigment and fine GCC are on the same level as and in many cases even greater than the strength of the control product without pigment. In particular, the 28 day compressive strength of products prepared from mixtures containing pigment and fine GCC is in many cases substantially greater than that of the control product without pigment.

Finally, the L values in the table above demonstrate that it is possible by means of the present invention to obtain a high color saturation and at the same time to maintain workability of the wet mixtures and to obtain compressive strength in the finished products that is comparable to or even improved over that of a non-pigmented control product.

In summary, for each pigment there is an optimal combination of fine GCC + pigment to achieve the same workability/flowability comparable to sample 1 without fine GCC or pigment. Furthermore, by selecting a suitable amount of fine GCC the proportion of pigment can be significantly increased. As a result, the color of the final product may significantly enhanced without modification of the water or admixture content. Moreover, the strength at 1 and 28 days is comparable to or better than that of sample 1.

## Claims

1. A cement-based product prepared from a mixture of a cementitious binder, an aggregate, an inorganic pigment, water, optionally a concrete superplasticizer, and fine ground calcium carbonate (GCC) having a weight median particle diameter (d50) in the range of 0.5-5 µm, wherein the weight amount of the fine GCC is in the range of 50% to 300% of the inorganic pigment weight.

2. A method for preparing a cement-based product, the method comprising mixing a cementitious binder, an aggregate, an inorganic pigment, water, optionally a concrete superplasticizer, and fine ground calcium carbonate (GCC) having a weight median particle diameter (d50) in the range of 0.5-5 µm, wherein the weight amount of the fine GCC is in the range of 50% to 300% of the inorganic pigment weight.

3. The method of claim 2, wherein the weight amount of the fine GCC is in the range of 60% to 280% of the inorganic pigment weight, such as 70% to 250%, e.g. 80% to 200%.

4. The method of claim 2 or 3, wherein the fine GCC has a d50 in the range of 0.5-4.9 µm, e.g. 0.6-4.8 µm, such as 0.8-4.7 µm, e.g. 0.9-4.6 µm, such as 1.0-4.5 µm, e.g. 1.0-4.0 µm.

5. The method of any of claims 2-4, wherein the fine GCC is added in an amount effective to provide the mixture with a mini-cone test value in the range of 350-430 mm, preferably 360-420 mm and a V-funnel test value of at the most about 7 seconds.

6. The method of any of claims 2-5, wherein the mixture comprises at least 2% w/w of the inorganic pigment by weight of the cementitious binder, e.g. at least 3%, such as at least 4%.

7. The method of claim 6, wherein the mixture comprises up to 30% inorganic pigment by weight of the cementitious binder, e.g. up to and including 25%, e.g. as up to and including 20%, such as up to and including 15%, such as up to and including 12%.

8. The method of any of claims 2-7, wherein the inorganic pigment is selected from the group consisting of a synthetic or natural iron oxide pigment, a chromium oxide pigment, cobalt blue, titanium dioxide and a nickel or chrome antimony titanium pigment.

9. The method of claim 8, wherein the inorganic pigment is a synthetic iron oxide pigment is selected from the group consisting of a red iron oxide pigment, a black iron oxide pigment, a yellow iron oxide pigment and a brown iron oxide pigment.

10. The method of any of claims 2-9, wherein the fine GCC is fine natural ground calcium carbonate (fine NGCC).

11. The method of any of claims 2-10, wherein the cementitious binder comprises a hydraulic cement, e.g. Portland cement, and optionally at least one additional binder component selected from the group consisting of fly ash, blast furnace slag, pozzolana, silica fume and calcined clay.

12. The method of any of claims 2-11, wherein the mixture further comprises ground calcium carbonate (GCC) having a weight median particle diameter (d50) greater than 5 µm to 40 µm.

13. The method of any of claims 2-12, wherein the cement-based mixture is allowed to cure to obtain a cement-based product having a 1 day and/or 28 day compressive strength that is at least 90% of the compressive strength of that of a comparable reference cement-based product that does not contain either pigment or fine GCC.

## Patentansprüche

1. Zementbasiertes Produkt, das aus einem Gemisch aus einem zementösen Bindemittel, einem Aggregat, einem anorganischen Pigment, Wasser, optionell einem Betonverflüssiger und feinem gemahlenem Kalziumkarbonat (GCC), das einen mittleren Massenteilchendurchmesser (d50) im Bereich von 0,5-5 µm aufweist, gefertigt ist, wobei die Gewichtsmenge des feinen GCC im Bereich von 50% bis 300% des anorganischen Pigmentgewichts liegt.

2. Verfahren zur Herstellung eines zementbasierten Produkts, wobei das Verfahren Mischen eines zementösen Bindemittels, eines Aggregats, eines anorganischen Pigments, von Wasser, optionell eines Betonverflüssigers und von feinem gemahlenem Kalziumkarbonat (GCC) umfasst, das einen mittleren Massenteilchendurchmesser (d50) im Bereich von 0,5-5 µm aufweist, wobei die Gewichtsmenge des feinen GCC im Bereich von 50% bis 300% des anorganischen Pigmentgewichts liegt.

3. Verfahren nach Anspruch 2, wobei die Gewichtsmenge des feinen GCC im Bereich von 60% bis 280% des anorganischen Pigmentgewichts, wie 70% bis 250%, z.B. 80% bis 200% liegt.

4. Verfahren nach Anspruch 2 oder 3, wobei das feine GCC einen d50 im Bereich von 0,5-4,9 µm, z.B. 0,6-4,8 µm, wie 0,8-4,7 µm, z.B. 0,9-4,6 µm, wie 1,0-4,5 µm, z.B. 1,0-4,0 µm aufweist.

5. Verfahren nach einem der Ansprüche 2-4, wobei das feine GCC in einer wirksamen Menge beigegeben wird, um das Gemisch mit einem Mini-Konus Testwert im Bereich von 350-430 mm, vorzugsweise 360-420 mm, und einem V-Trichter Testwert von höchstens etwa 7 Sekunden bereitzustellen.

6. Verfahren nach einem der Ansprüche 2-5, wobei das Gemisch mindestens 2 Gew.-% des anorganischen Pigments je Gewicht des zementösen Bindemittels, z.B. mindestens 3%, wie mindestens 4% umfasst.

7. Verfahren nach Anspruch 6, wobei das Gemisch bis zu 30% des anorganischen Pigments je Gewicht des zementösen Bindemittels umfasst, z.B. bis zu und einschließlich 25%, z.B. bis zu und einschließlich 20%, wie bis zu und einschließlich 15%, wie bis zu und einschließlich 12%.

8. Verfahren nach einem der Ansprüche 2-7, wobei das anorganische Pigment aus der Gruppe ausgewählt wird, die aus einem synthetischen oder natürlichen Eisenoxidpigment, einem Chromoxidpigment, Kobaltblau, Titandioxid, und einem Nickel- oder Chrom-Antimon-Titanpigment besteht.

9. Verfahren nach Anspruch 8, wobei das anorganische Pigment ein synthetisches Eisenoxidpigment ist, ausgewählt aus der Gruppe, die aus einem roten Eisenoxidpigment, einem schwarzen Eisenoxidpigment, einem gelben Eisenoxidpigment und einem braunen Eisenoxidpigment besteht.

10. Verfahren nach einem der Ansprüche 2-9, wobei das feine GCC ein feines natürliches gemahlenes Kalziumkarbonat (feines NGCC) ist.

11. Verfahren nach einem der Ansprüche 2-10, wobei das zementöse Bindemittel einen hydraulischen Zement, z.B. Portlandzement, und optionell mindestens eine zusätzliche Bindemittelkomponente umfasst, die aus der Gruppe ausgewählt wird, die aus Flugasche, Hochofenschlacke, Pozzolan, Silicastaub und kalziniertem Lehm besteht.

12. Verfahren nach einem der Ansprüche 2-11, wobei das Gemisch weiter gemahlenes Kalziumkarbonat (GCC) umfasst, das einen mittleren Massenteilchendurchmesser (d50) größer als 5 µm bis 40 µm aufweist.

13. Verfahren nach einem der Ansprüche 2-12, wobei das zementbasierte Gemisch aushärten darf, um ein zementbasiertes Produkt zu erhalten, das eine Druckfestigkeit nach 1 Tag und / oder 28 Tagen aufweist, die mindestens 90% der Druckfestigkeit jenes eines vergleichbaren zementbasierten Bezugsprodukts aufweist, das weder Pigment, noch feines GCC enthält.

## Revendications

1. Produit à base de ciment préparé à partir d'un mélange d'un liant cimentaire, d'un agrégat, d'un pigment inorganique, d'eau, éventuellement d'un superplastifiant pour béton et de carbonate de calcium broyé (GCC) finement ayant un diamètre de particule moyen en poids (d50) dans la plage de 0,5 à 5 µm, dans lequel la quantité en poids du GCC broyé finement est dans la plage de 50 % à 300 % du poids du pigment inorganique.

2. Procédé de préparation d'un produit à base de ciment, le procédé comprenant le mélange d'un liant cimentaire, d'un agrégat, d'un pigment inorganique, d'eau, éventuellement d'un superplastifiant pour béton et de carbonate de calcium broyé (GCC) finement ayant un diamètre de particule moyen en poids (d50) dans la plage de 0,5 à 5 µm, dans lequel la quantité en poids du GCC broyé finement est dans la plage de 50 % à 300 % du poids du pigment inorganique.

3. Procédé selon la revendication 2, dans lequel la quantité en poids du GCC broyé finement est dans la plage de 60 % à 280 % du poids de pigment inorganique, telle que de 70 % à 250 %, par exemple, de 80 % à 200 %.

4. Procédé selon la revendication 2 ou 3, dans lequel le GCC broyé finement a un d50 dans la plage de 0,5 à 4,9 µm, par exemple, de 0,6 à 4,8 µm, tel que de 0,8 à 4,7 µm, par exemple, de 0,9 à 4,6 µm, tel que de 1,0 à 4,5 µm, par exemple, de 1,0 à 4,0 µm.

5. Procédé selon l'une quelconque des revendications 2-4, dans lequel le GCC broyé finement est ajouté dans une quantité efficace pour fournir au mélange une valeur d'essai au mini-cône dans la plage de 350 à 430 mm, de préférence, de 360 à 420 mm et d'une valeur d'essai à l'entonnoir en V d'environ 7 secondes au plus.

6. Procédé selon l'une quelconque des revendications 2-5, dans lequel le mélange comprend au moins 2 % en poids du pigment inorganique par poids du liant cimentaire, par exemple au moins 3 %, tel qu'au moins 4 %.

7. Procédé selon la revendication 6, dans lequel le mélange comprend jusqu'à 30 % de pigment inorganique par poids du liant cimentaire, par exemple jusqu'à 25 % inclus, par exemple tel que jusqu'à 20 % inclus, tel que jusqu'à 15 % inclus, tel que jusqu'à 12 % inclus.

8. Procédé selon l'une quelconque des revendications 2-7, dans lequel le pigment inorganique est sélectionné dans le groupe constitué d'un pigment d'oxyde de fer synthétique ou naturel, d'un pigment d'oxyde de chrome, de bleu de cobalt, de dioxyde de titane et d'un pigment de nickel ou chrome antimoine titane.

9. Procédé selon la revendication 8, dans lequel le pigment inorganique est un pigment d'oxyde de fer synthétique sélectionné dans le groupe constitué d'un pigment d'oxyde de fer rouge, d'un pigment d'oxyde de fer noir, d'un pigment d'oxyde de fer jaune et d'un pigment d'oxyde de fer marron.

10. Procédé selon l'une quelconque des revendications 2-9, dans lequel le GCC broyé finement est un carbonate de calcium naturel broyé finement (NGCC broyé finement).

11. Procédé selon l'une quelconque des revendications 2-10, dans lequel le liant cimentaire comprend un ciment hydraulique, par exemple du ciment Portland, et éventuellement au moins un constituant de liant supplémentaire sélectionné dans le groupe constitué de cendre volante, de laitier de haut fourneau, de pouzzolane, de fumées de silice et d'argile calcinée.

12. Procédé selon l'une quelconque des revendications 2-11, dans lequel le mélange comprend en outre du carbonate de calcium broyé (GCC) ayant un diamètre de particule moyen en poids (d50) supérieur à 5 µm à 40 µm.

13. Procédé selon l'une quelconque des revendications 2-12, dans lequel on laisse durcir le mélange à base de ciment pour obtenir un produit à base de ciment ayant une résistance à la compression de 1 jour et/ou de 28 jours qui représente au moins 90 % de la résistance à la compression d'un produit à base de ciment de référence comparable qui ne contient ni pigment ni GCC broyé finement.
